# EUROPEAN PATENT APPLICATION

(11) **EP 3 834 684 A1**
(43) Date of publication of application: **16.06.2021**
(21) Application number: 20193757.0
(22) Date of filing: 31.08.2020
(51) Int. Cl.: A47J 37/10

(54) **PAN WITH AT LEAST TWO BOTTOM PORTIONS**

(30) Priority: 09.12.2019 CH 15652019
(71) Applicant: Galera Toledo, María Ángeles, 3014 Bern (CH)
(72) Inventor: Flores Grima, Bartolomé, 3014 Bern (CH)
(74) Representative: Vesterinen, Jussi Tapio

(57) **Abstract**

One example embodiment of the present invention concerns a frying pan (1) comprising a first bottom portion (9) with a first heat source facing surface and a first food item facing surface, and a second, different bottom portion (11) with a second heat source facing surface and a second food item facing surface. The first and second bottom portions (9, 11) are configured for cooking a food item. The second bottom portion (11) is thicker than the first bottom portion (9), and the second food item facing surface is inclined with respect to the second heat source facing surface.

## Description

### TECHNICAL FIELD

The present invention relates to a pan, such as a frying pan, having at least two bottom portions. More specifically, the bottom portions have a different thickness in order to improve the cooking result.

### BACKGROUND OF THE INVENTION

A typical frying pan comprises a bottom portion, a side portion and a handle. The bottom portion has a substantially constant thickness throughout. However, it is difficult to obtain satisfactory cooking results with such a pan. For example, if this kind of pan is used for preparing a steak, then the fried steak is dry, or if excess cooking oil or butter is used during the cooking, then the steak has a greasy taste.

### SUMMARY OF THE INVENTION

It is an object of the present invention to overcome at least some of the problems above related to cooking with a pan. More specifically, the object of the present invention is to propose a pan providing the user with a satisfactory and tasty cooking result.

According to a first aspect of the present invention, there is provided a pan as recited in claim 1.

The proposed pan comprises at least two bottom portions, each having a different thickness with respect to each other. The thinner portion may be used to initially sear the steak, while the thicker portion may be used to finalise the steak or another food item. Thus, only one pan is required to prepare the steak from the beginning to the end. Furthermore, the thicker portion has an inclined surface so that any excess fat leaves this portion to improve the cooking or frying result. In this manner, a juicy, tasty and healthier end result can be obtained when compared with cooking results obtained with traditional frying pans.

According to a second aspect of the present invention, there is provided a set of pans according to the first aspect, wherein the set comprises a first pan and a second pan, and wherein a second food item facing surface of the first pan has a first angle of inclination, while a second food item facing surface of the second pan has a second, different angle of inclination.

Other aspects of the invention are recited in the dependent claims attached hereto.

### BRIEF DESCRIPTION OF THE DRAWINGS

Other features and advantages of the invention will become apparent from the following description of a non-limiting example embodiment, with reference to the appended drawings, in which:
- Figure 1 is a top view of a pan according to a first example embodiment of the present invention;
- Figure 2 is a perspective view of the pan of Figure 1;
- Figure 3 is a cross-sectional view of the pan of Figure 1, taken along line A-A in Figure 1;
- Figure 4 is an enlarged cross-sectional view of the pan bottom of the pan of Figure 1;
- Figure 5 is an enlarged cross-sectional view of the pan bottom according to variant of the invention;
- Figure 6 a cross-sectional view of the pan according to a further variant of the invention; and
- Figure 7 is a front view of a separation element used in the variant of Figure 6.

### DETAILED DESCRIPTION OF AN EMBODIMENT OF THE INVENTION

An example embodiment of the present invention will now be described in detail with reference to the attached drawings. The embodiment is described in the context of a frying pan for preparing meat. However, the teachings of the invention are not limited to this environment or application. Identical or corresponding functional and structural elements which appear in the different drawings are assigned the same reference numerals. As utilised herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." Furthermore, the term "comprise" is used herein as an open-ended term. This means that the object encompasses all the elements listed, but may also include additional, unnamed elements. Thus, the word "comprise" is interpreted by the broader meaning "include", "contain" or "comprehend". Moreover, in the present description, the word "pan" is understood to mean any cooking appliance that is designed for cooking a food item.

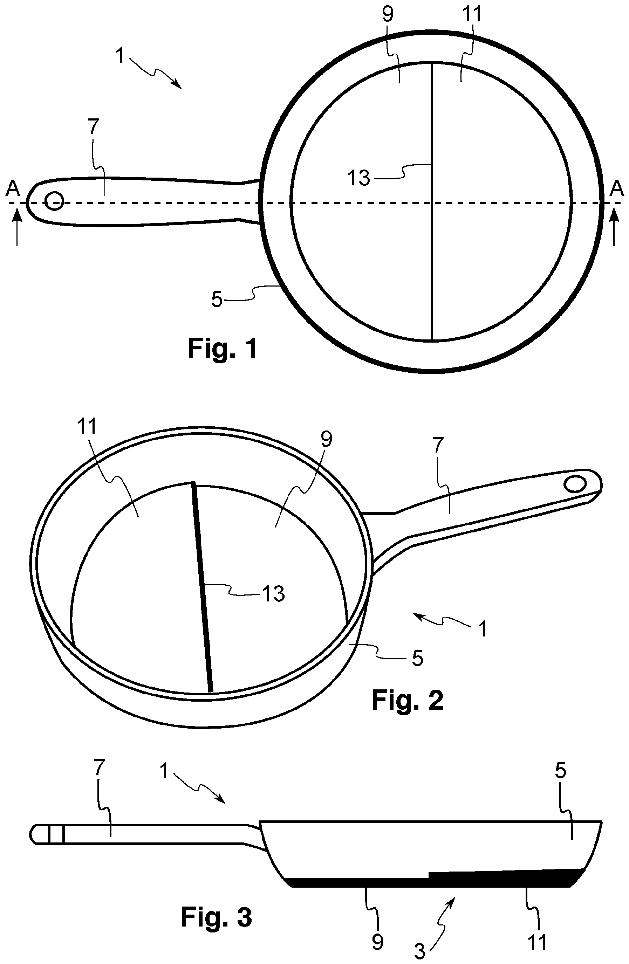

An example embodiment of the present invention is next explained in detail with reference to the drawings. Figures 1 to 3 show a cooking appliance 1 according to the present example embodiment, which in this example is a pan, and more specifically a frying pan. The pan 1 comprises a base or bottom 3, which is integrally formed with a peripheral flange, side wall or simply side 5. The pan also comprises a handle 7 to allow a user to grab the pan. As shown in the figures, the pan bottom 3 is divided into two portions, namely a first bottom portion 9 and a second bottom portion 11. The first bottom portion 9 has a first thickness, which in this example is constant or substantially constant. The thickness is measured along a direction which is orthogonal to a bottom surface of the base. The second bottom portion 11 has a second, different thickness. The thickness of the second bottom portion 11 is non-constant as shown in Figure 3. More specifically, in the present example, the second thickness increases in the direction away from the first bottom portion 9. As further shown in Figure 3, the thickness increase is gradual or constant, but this does not have to be the case. In the present example, a step or a wall 13 divides the pan bottom 3 into the first and second bottom portions 9, 11. The height of the step 13 may be between 1 mm and 5 mm, or more specifically between 1.5 and 3 mm. The height is again measured in the direction, which is orthogonal to the bottom surface of the base. In the present example, the step is substantially orthogonal with respect to the bottom surface of the base. Furthermore, in the present example, the first bottom portion 9 is on the side of the handle, while the second bottom portion 11 is on the other side of the pan. However, the locations of the first and second portions could be reversed or arranged in a different way.

The first bottom portion 9 comprises or defines a first bottom surface or a first heat source facing side or surface and a first top surface or a first food item facing side or surface, while the second bottom portion 11 comprises or defines a second bottom surface or a second feat source facing side or surface, and a second top surface or a second food item facing side or surface. The first food item facing surface is opposite to or above the first heat source facing surface, while the second food item facing surface is opposite to or above the second heat source facing surface. As is shown in Figure 3, the bottom surface of the pan formed by the first and second heat source facing surfaces is flat or substantially flat. In other words, substantially the entire first and second heat source facing surfaces are arranged to be in direct or intimate contact with the heat source or directly above it (for example if a gas heat source is used). The bottom 3 may be made of any suitable material, but it is particularly advantageous to make the bottom of, or to make the bottom so that it contains cast iron, stainless steel, and/or aluminium to withstand high temperatures during cooking. For this purpose, the pan may be made heavy bottomed. If the pan is used for cooking meat, then the pan, and in particular the bottom is advantageously uncoated. Furthermore, in this case, the surface of the bottom is made non-undulated, although the teachings of the present invention would also apply to undulated and/or coated pan bottoms. Thus, at least one of the bottom portions could be undulated. According to the present example embodiment, both the first and second bottom portions, and more specifically their entire or substantially entire food item facing surfaces, are designed or configured to be used for cooking or frying food.

The pan may be used for cooking various food items, such as meat, fish, vegetables, etc. The use of the of the pan 1 is now explained in more detail in the context of preparing a meat steak. Before starting the cooking operation, the user first inserts fat, such as butter or oil, onto the first food item facing surface, but preferable not onto the second food item facing surface. Next, once the pan 1 has reached its desired temperature while being heated by a heat source, such as a stove, the piece of meat is inserted onto the first food item facing surface. The piece of meat can now be fried or seared in the first bottom portion 9 over high heat. The searing is continued until the steak gets a caramelised brown crust giving it lots of flavour. Once the caramelised brown crust is achieved and thus once the pores of the meat have been closed, the piece of meat is preferably moved to the second bottom portion 11. It is to be noted that the second food item facing surface of the second bottom portion has substantially the same temperature as the first food item facing surface, but the temperature distribution may be more even in the second portion than in the first bottom portion thanks to the thicker bottom. The cooking operation is now continued until the meat has reached its desired doneness. In other words, the purpose of the second bottom portion 11 is to finalise the cooking operation by e.g. roasting the meat. Thanks to the sloping surface of the second bottom portion 11, it acts as a drainer. Accordingly, any excess fat can be drained away, in this case back to the first bottom portion 9. In other words, in the present embodiment, the pan 1 is devoid of any separation means that would prevent the fat from flowing back to the first bottom portion 9 from the second bottom portion 11. This will improve the taste of the meat, and it also makes the meat healthier as any excess fat can be drained away. Furthermore, as in this example the surface area of the first food item facing surface is approximately a half of the total bottom top surface, less fat is required for the cooking operation compared with a conventional pan.

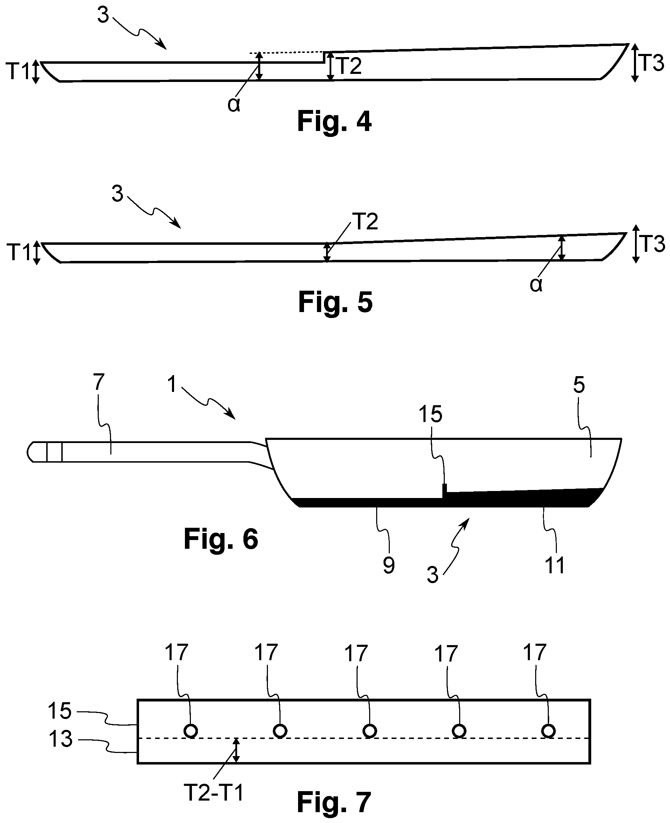

Figure 4 shows in an enlarged cross-sectional view the pan bottom 3. T1 denotes the thickness of the first bottom portion, T2 denotes the smallest thickness of the second bottom portion, and T3 denotes the greatest thickness of the second bottom portion. T1 is preferably in the range of 2 mm to 6 mm, or more specifically in the range of 3 mm to 5 mm. In this specific example, T1 is substantially 4 mm. T2 is preferably in the range of 3 mm to 10 mm, or more specifically in the range of 4 mm to 8 mm. In this specific example, T2 is in the range of 5 mm to 6 mm, or more specifically approximately 5.5 mm. T3 is preferably in the range of 4 mm to 14 mm, or more specifically in the range of 5 mm to 10 mm. In this specific example, T3 is in the range of 6 mm to 8 mm, or more specifically approximately 6.5 mm. The height of the step 13 is preferably in the range of 1 mm to 10 mm, or more specifically in the range of 1 to 5 mm. In this specific example, the step height is in the range of 1.3 mm to 3.5 mm, or more specifically approximately 1.5 mm. The angle *α* denotes the slope angle of the second bottom portion or its angle of inclination. More specifically, this angle is the angle between the second food item facing surface and the pan bottom surface, i.e. for example the second heat source facing surface. The angle is in the range of 0.3 degrees to 30 degrees, or more specifically in the range of 0.3 degrees to 3 degrees. In the present example, the angle is between 0.3 degrees and 1 degree. As the angle of inclination at least partially defines the drainage rate of the fat, the best value of the angle may depend on the food item to be cooked on that surface. Accordingly, a set of pans may be provided so that the set comprises at least two pans having different angles of inclination of the second food item facing surface. It has been discovered that the above dimensions provide a favourable function, thus leading to a favourable cooking end result. Furthermore, no material is wasted as the thickness values can be kept small.

In the above embodiment, the step 13 was configured as a straight or substantially straight element or wall located in the middle region of the pan bottom. More specifically, the step 13 divided the pan bottom into equally large bottom portions. This also meant that the sloping surface occupied substantially half of the entire food item facing surface of the pan 1. In the example above, the first and second bottom portions 9, 11 each have a semi-circular shape, although other shapes are also possible. However, the above described embodiment may be varied in many ways to obtain further variants of the invention. For example, the step 13 does not need to form a straight border between the first and second bottom portions. For example, the step 13 may form a curved border between the first and second bottom portions, and/or having a step shape, and/or having a sawtooth shape, and/or having an undulating shape. Moreover, one of the first and second bottom portions may be larger than the other. For example, one of the bottom portions may be approximately 1/3, 1/4, or 1/5 of the total bottom surface, while the other bottom portion would occupy a surface area of 2/3, 3/4 or 4/5 of the total bottom surface area, respectively.

It is also to be noted, according to one variant, the step 13 that would prevent any fat from flowing from the first bottom portion to the second bottom portion is omitted. This variant would have the disadvantage over the embodiment described above that there is a risk of some fat entering the second bottom portion 11 from the first bottom portion 9. However, this variant would have the advantage that less material would be needed to manufacture the pan, and more specifically the pan bottom. Figure 5 illustrates the pan bottom cross section according to this variant. Thus, according to this variant, T1 equals T2.

Figures 6 and 7 illustrate yet another variant of the present invention. According to this variant, the pan 1 comprises a separation element 15, which may be configured as a protrusion, bump or a wall element in the region between the first and second bottom portions. The separation element better separates the first and second bottom portions 9, 11 from each other. The separation element 15 would have the advantage that it would minimise any fat from entering the second bottom portion 11 from the first bottom portion 9 while allowing a fat to be drained back to the first bottom portion through one or more openings or holes 17 (forming a set of openings) provided in the separation element 15. The one or more openings thus extend cross-sectionally through the separation element 15. The one or more openings may have a circular, oval or any other suitable cross section as shown in Figure 7, or one or more of them could have a longitudinal cross section. For example, there could be only one opening but so that it would extend over a major portion of the length (e.g. at least 50% of its length) of the separation element.

In the above embodiment, the first and second food item facing surfaces are flat or substantially flat surfaces. However, this does not have to be the case. For example, the second food item facing surface could be designed so that its thickness increases or decreases towards the side 5. This would have the advantage that it would be easier to control the exact location where the excess flat could be directed to. Furthermore, the pan bottom 3 could be divided into more than two bottom portions such that at least one of the bottom portions could have a sloped or inclined surface. For example, the pan bottom 3 could be divided into three or four bottom portions, which may or may not be separated from each other by a separation element. If more than one of the bottom portions have a sloping surface, then different inclinations could be used such that the angle of the inclination could depend on the intended cooking item on the respective surface.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. Further variants may be obtained by combining any of the above teachings.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A pan (1) comprising a first bottom portion (9) with a first heat source facing surface and a first food item facing surface, and a second, different bottom portion (11) with a second heat source facing surface and a second food item facing surface, the first and second bottom portions (9, 11) being configured for cooking a food item, wherein the second bottom portion (11) is thicker than the first bottom portion (9), and the second food item facing surface is inclined with respect to the second heat source facing surface.

2. The pan (1) according to claim 1, wherein the second food item facing surface is inclined towards the first bottom portion (9) such that the thickness of the second bottom portion (11) decreases towards the first bottom portion (9).

3. The pan (1) according to claim 2, wherein the thickness decrease is substantially constant.

4. The pan (1) according to any one of the preceding claims, wherein a step (13) is provided between the first and second bottom portions (9, 11).

5. The pan (1) according to claim 4, wherein the step (13) has a height of at least 1 mm or more preferably at least 1.5 mm.

6. The pan (1) according to any one of claims 1 to 3, wherein the transition between the first and second bottom portions (9, 11) is smooth.

7. The pan (1) according to any one of the preceding claims, wherein substantially the entire second food item facing surface is inclined.

8. The pan (1) according to any one of the preceding claims, wherein the angle of inclination is between 0.3 degrees and 20 degrees, or more specifically between 0.3 degrees and 3 degrees.

9. The pan (1) according to any one of the preceding claims, wherein the first and second bottom portions (9, 11) are made of the same material or material mixture, and wherein the first and second bottom portions (9, 11) are made of or contain aluminium, cast iron or stainless steel.

10. The pan (1) according to any one of the preceding claims, wherein the first and second food item facing surfaces are uncoated.

11. The pan (1) according to any one of the preceding claims, wherein the first bottom portion (9) has a substantially constant thickness.

12. The pan (1) according to any one of the preceding claims, wherein the first and/or second bottom portions (9, 11) have a non-undulating surface.

13. The pan (1) according to any one of the preceding claims, wherein the first and second food item facing surfaces have substantially the same surface area.

14. The pan (1) according to any one of the preceding claims, wherein the first and second bottom portions are separated by a separation element (15) comprising one or more holes (17) to allow a liquid to flow through the one or more holes (17) from the second bottom portion (11) onto the first bottom portion (9).

15. A set of pans (1) according to any one of the preceding claims, wherein the set comprises a first pan and a second pan according to any one of the preceding claims, wherein the second food item facing surface of the first pan has a first angle of inclination, while the second food item facing surface of the second pan has a second, different angle of inclination.

## Amended claims

### Amended claims in accordance with Rule 137(2) EPC.

1. A pan (1) comprising a pan bottom (3) comprising a first bottom portion (9) with a first heat source facing surface and a first food item facing surface, and a second, different bottom portion (11) with a second heat source facing surface and a second food item facing surface, the first and second bottom portions (9, 11) being configured for cooking a food item, wherein the second bottom portion (11) is thicker than the first bottom portion (9), and the second food item facing surface is inclined with respect to the second heat source facing surface, **characterised in that** the pan bottom (3) is divided into the first bottom portion (9) and the second bottom portion (11) such that the first and second food item facing surfaces have substantially the same surface area.

2. The pan (1) according to claim 1, wherein the second food item facing surface is inclined towards the first bottom portion (9) such that the thickness of the second bottom portion (11) decreases towards the first bottom portion (9).

3. The pan (1) according to claim 2, wherein the thickness decrease is substantially constant.

4. The pan (1) according to any one of the preceding claims, wherein a step (13) is provided between the first and second bottom portions (9, 11).

5. The pan (1) according to claim 4, wherein the step (13) has a height of at least 1 mm or more preferably at least 1.5 mm.

6. The pan (1) according to claim 4 or 5, wherein the step (13) has a height between 1 mm and 5 mm.

7. The pan (1) according to any one of claims 1 to 3, wherein the transition between the first and second bottom portions (9, 11) is stepless.

8. The pan (1) according to any one of the preceding claims, wherein substantially the entire second food item facing surface is inclined.

9. The pan (1) according to any one of the preceding claims, wherein the angle of inclination of the second food item facing surface is between 0.3 degrees and 20 degrees, or more specifically between 0.3 degrees and 3 degrees.

10. The pan (1) according to any one of the preceding claims, wherein the first and second bottom portions (9, 11) are made of the same material or material mixture, and wherein the first and second bottom portions (9, 11) are made of or contain aluminium, cast iron or stainless steel.

11. The pan (1) according to any one of the preceding claims, wherein the first and second food item facing surfaces are uncoated.

12. The pan (1) according to any one of the preceding claims, wherein the first bottom portion (9) has a substantially constant thickness.

13. The pan (1) according to any one of the preceding claims, wherein the first and/or second bottom portions (9, 11) have a non-undulating surface.

14. The pan (1) according to any one of the preceding claims, wherein the first and second bottom portions are separated by a separation element (15) comprising one or more holes (17) to allow a liquid to flow through the one or more holes (17) from the second bottom portion (11) onto the first bottom portion (9).

15. A set of pans (1) according to any one of the preceding claims, wherein the set comprises a first pan and a second pan according to any one of the preceding claims, wherein the second food item facing surface of the first pan has a first angle of inclination, while the second food item facing surface of the second pan has a second, different angle of inclination.
